# EUROPÄISCHE PATENTSCHRIFT

(11) **EP 3 520 986 B1**
(45) Veröffentlichungstag und Bekanntmachung des Hinweises auf die Patenterteilung: **15.04.2020**
(21) Anmeldenummer: 19154570.6
(22) Anmeldetag: 30.01.2019
(51) Int. Cl.: B29C 45/76

(54) **VERFAHREN UND ANORDNUNG ZUR STEUERUNG MINDESTENS EINES PROZESSPARAMETERS EINER SPRITZGIESSMASCHINE**
METHOD AND ASSEMBLY FOR CONTROLLING AT LEAST ONE PROCESS PARAMETER OF AN INJECTION MOULDING MACHINE
PROCÉDÉ ET DISPOSITIF DE COMMANDE D'AU MOINS UN PARAMÈTRE DE PROCESSUS D'UNE MACHINE DE MOULAGE PAR INJECTION

(30) Priorität: 01.02.2018 DE 102018102299
(43) Veröffentlichungstag der Anmeldung: 07.08.2019
(73) Patentinhaber: INTRAVIS Gesellschaft für Lieferungen und Leistungen von bildgebenden und bildverarbeitenden Anlagen und Verfahren mbH, 52068 Aachen (DE)
(72) Erfinder: Fuhrmann, Gerd, 52066 Aachen (DE); Herzog, Robert, 52074 Aachen (DE)
(74) Vertreter: Kohlmann, Kai

(56) Entgegenhaltungen:
- US-A1- 2002 055 806

## Beschreibung

Die Erfindung betrifft ein Verfahren und eine Anordnung zur Steuerung mindestens eines Prozessparameters einer Spritzgießmaschine.

Im Wege des Spritzgießens lassen sich wirtschaftlich Spritzgußteile in großer Stückzahl herstellen. Es wird hauptsächlich in der Kunststoffverarbeitung zur Herstellung von Kunststoff-Spritzgußteilen eingesetzt. Dazu wird Kunststoff in einer Spritzeinheit plastifiziert und in das Formwerkzeug einer Spritzgießmaschine eingespritzt. Das Formwerkzeug weist mindestens eine, üblicherweise jedoch mehrere Kavitäten auf. Sofern mehrere Kavitäten in dem Formwerkzeug enthalten sind, lassen sich in einem Zyklus, auch als Schuss bezeichnet, gleichzeitig mehrere Spritzgußteile herstellen. Die in jedem Zyklus hergestellten Spritzgußteile werden entformt und anschließend beispielsweise mittels eines Förderers abtransportiert.

Die hohe Arbeitsgeschwindigkeit von Spritzgießmaschinen, die zumeist große Anzahl von Kavitäten in dem Formwerkzeug sowie die weitgehend automatisierte Bedienung hat zur Folge, dass Fehler in dem Herstellungsprozess vielfach erst spät bemerkt werden, sodass eine große Menge an Ausschuss hergestellt wird.

Um Fehler feststellen zu können, ist es üblich, aus der laufenden Herstellung der Spritzgußteile sogenannte Rückstellmuster zu entnehmen. Zur Entnahme der Rückstellmuster werden unmittelbar zwischen die Spritzgießmaschine und einen Förderer zum Abtransport der Spritzgußteile Vorrichtungen zum Ausschleusen der Rückstellmuster eingebaut. Die ausgeschleusten Rückstellmuster werden in einem Behälter gesammelt und mit an sich bekannten Methoden auf Fehler im Herstellungsprozess untersucht. Abhängig von der Untersuchung kann mit großer zeitlicher Verzögerung der Herstellungsprozess der Spritzgießmaschine angepasst werden.

Da Fehler in den Spritzgußteilen häufig durch einzelne Kavitäten des Formwerkzeugs verursacht werden sind darüber hinaus Verfahren und Systeme bekannt geworden, die eine Rückverfolgung erlauben, aus welcher Kavität der Spritzgießmaschine fehlerhafte Spritzgußteile stammen:
Die DE 600 28 756 T2 offenbart, dass der Auswurf der hergestellten Spritzgußteile derart erfolgt, dass die relative sequentielle Ordnung der Teile während der Förderung bis zum Inspektionssystem erhalten bleibt. Werden im Inspektionssystem Fehler festgestellt, lässt sich auf diese Weise nachverfolgen, aus welcher Kavität die fehlerbehafteten Spritzgußteile ausgeworfen wurden. Dies erlaubt eine selektive Steuerung des Spritzguß- und Inspektionssystems unter Berücksichtigung der Kavität bzw. Kavitäten, die für fehlerhafte Spritzgußteile verantwortlich sind.

Sofern die relative sequentielle Ordnung der ausgeworfenen Spritzgußteile während der Förderung bis zum Inspektionssystem nicht aufrechterhalten werden kann, schlägt die EP 1 674 234 A2 vor, eine für die herstellende Kavität spezifische Information in jedes Spritzgußteil einzubringen, die von dem Inspektionssystem ausgelesen und mit festgestellten Fehlern korreliert wird. Abhängig von der Anzahl der erkannten Fehler lassen sich mit den bekannten Verfahren gezielt einzelne, für die Fehler verantwortliche Kavitäten der Spritzgießmaschine abschalten.

Aus der US 2002/0 055 806 A1 ist ein Verfahren zur Steuerung mindestens eines Prozessparameters einer Spritzgießmaschine bekannt, die einen Steuerungsrechner aufweist. Mit Hilfe eines Robotersystems werden entformte Spritzgußteile stichprobenartig an ein Prüfsystem übergeben. Das Prüfsystem weist zur Dimensionsmessung der Spritzgußteile eine hochauflösende Kamera auf. Mithilfe eines Optimierungsrechners werden neben den Daten der Kamera Prozessdaten der Spritzgießmaschine analysiert und aufbereitet. Aus den derart aufbereiteten Daten werden aktualisierte Steuerungsdaten abgeleitet und an den Steuerungsrechner der Spritzgießmaschine übertragen. Ausgehend von diesem Stand der Technik liegt der Erfindung die Aufgabe zugrunde, ein Verfahren und eine Anordnung zur Steuerung mindestens eines Prozessparameters einer Spritzgießmaschine zu schaffen, das frühzeitig einen automatischen Eingriff in die Steuerung mindestens eines Prozessparameters der Spritzgießmaschine erlaubt, um der Herstellung fehlerhafter Spritzgußteile entgegenzuwirken und die Abschaltung von Kavitäten zu vermeiden, wobei die Verarbeitung und Übertragung der zur Durchführung des Verfahrens erforderlichen Daten mit der vorhandenen Rechenleistung der Spritzgießmaschine und dem in der Produktionsumgebung der Spritzgießmaschine vorhandenen Netzwerk bewältigt werden sollen.

Diese Aufgabe wird durch ein Verfahren mit den Merkmalen des Anspruchs 1 und eine Anordnung mit den Merkmalen des Anspruchs 14 gelöst.

Die Erfindung beruht auf dem Gedanken, in einem Regelkreis die von dem optischen Prüfsystem erfassten Nutzdaten, die ein Merkmal jedes Spritzgußteils repräsentieren, statistisch zu analysieren und aufzubereiten. Aus der durch die Analyse und Aufbereitung reduzierten Menge der Nutzdaten werden Steuerungsdaten abgeleitet. Die reduzierten Nutzdaten oder die Steuerdaten werden über das Netzwerk zwischen der Datenverarbeitungseinheit des Prüfsystems und dem weniger leistungsfähigen Steuerungsrechner der Spritzgießmaschine übertragen, wobei das Netzwerk neben der Datenverarbeitungseinheit des Prüfsystems und dem Steuerungsrechner weitere Netzwerk-Komponenten zum Datenaustausch miteinander verbindet. Bei dem Netzwerk handelt es sich insbesondere um das in der Produktionsumgebung der Spritzgießmaschine ohnehin vorhandene leitungsgebundene Netz oder Funknetz, beispielsweise in Form eines Ethernet- Netzwerks oder eines WLANs vom Typ IEEE 802.11. Als Netzwerk zum Verbinden der Datenverarbeitungseinheit des Prüfsystems mit dem Steuerungsrechner kommt auch das Internet in Betracht.

Unter Nutzung der Steuerungsdaten kann der Steuerungsrechner vollautomatisch im laufenden Herstellungsprozess bestimmte Prozessparameter der Spritzgießmaschine ändern, um der Herstellung fehlerhafter Spritzgußteile entgegenzuwirken. Eingriffe einer Bedienperson zur Änderung von Prozessparametern der Spritzgießmaschine werden durch die Erfindung auf ein Minimum reduziert.

Die Erfindung berücksichtigt, dass in herkömmlichen Produktionsumgebungen vorhandene Spritzgießmaschinen in der Regel mit Steuerungsrechnern mit einer geringen Rechenleistung ausgestattet sind, während die optischen Prüfsysteme Datenverarbeitungseinheiten mit einer um ein Vielfaches höheren Rechenleistung aufweisen.

Um die Verarbeitung und Übertragung der für den Regelkreis erforderlichen Datenmengen mit den vorhandenen Rechenleistungen und dem vorhandenen Netzwerk bewältigen zu können, erfolgt die rechenintensive wiederholte statistische Analyse und Aufbereitung des sich fortlaufend ändernden Kollektivs der Nutzdaten sowie die Datenhaltung mittels der leistungsfähigen Datenverarbeitungseinheit des Prüfsystems. Die reduzierte Menge der Nutzdaten des Kollektivs oder die daraus abgeleiteten Steuerungsdaten werden über das Netzwerk zu dem Steuerungsrechner der Spritzgießmaschine nicht fortlaufend, sondern zyklisch oder sporadisch übertragen, um eine Überlastung des Netzwerks zu vermeiden. Zugleich wird der Steuerungsrechner der Spritzgießmaschine durch die Verarbeitung der geringen Datenmengen entlastet. Um weitgehend gleiche Bedingungen beim Aufnehmen der Bilddaten jedes zu dem Prüfsystem geförderten Spritzgußteils zu gewährleisten, divergiert die Förderzeit für das Fördern der entformten Spritzgußteile zu dem Prüfsystem für sämtliche Spritzgußteile so wenig wie möglich, maximal jedoch um das zweifache der Zykluszeit der Spritzgießmaschine. Vorzugsweise werden die entformten Spritzgußteile mit einem mit konstanter Geschwindigkeit betriebenen Stetigförderer von der Spritzgießmaschine zu dem Prüfsystem gefördert, um die Unterschiede in den Förderzeiten der einzelnen Spritzgußteile so gering wie möglich zu halten. Wenn die entformten Spritzgußteile unmittelbar, d.h. ohne zeitliche Unterbrechung nach deren Herstellung und Entformung zu dem Prüfsystem gefördert werden, trägt dies ebenfalls dazu bei, die Unterschiede in den Förderzeiten gering zu halten.

Das Aufnehmen von Bilddaten der zu dem Prüfsystem geförderten Spritzgußteile erfolgt mit mindestens einem digitalen Bildaufnahmegerät, insbesondere einer digitalen Kamera des Prüfsystems. Die rechenintensive Ermittlung von Nutzdaten aus den aufgenommenen Bilddaten erfolgt mithilfe der Datenverarbeitungseinheit des Prüfsystems.

Die Nutzdaten repräsentieren jeweils ein Merkmal jedes Spritzgußteils. Bei den Merkmalen handelt es sich insbesondere um geometrische Merkmale und/oder Fehler des Spritzgußteils. Handelt es sich bei den Spritzgußteilen beispielsweise um Verschlusskappen und/oder Behälter können deren Durchmesser, Ovalität und Höhe fortlaufend erfasst werden. Des Weiteren können die Nutzdaten unterschiedliche Arten von Fehlern des Spritzgußteils repräsentieren. Typische Fehler von Spritzgußteilen sind Flecken, Verbiegungen, Versprödungen, Blasen, Löcher, Kratzmarken, Kontaminationen, Bruchstellen, Haarrisse, Verfärbungen, Gratbildungen, Fließlinien, niedriger Glanz, Schrumpfungen, Unterspritzungen, Überspritzungen sowie das Fehlen oder die unvollständige Ausbildung bestimmter Bestandteile des Spritzgußteils, wie beispielsweise das Fehlen oder die unvollständige Ausbildung des Garantiebandes einer Verschlusskappe.

Die wiederholte statistische Analyse und Aufbereitung erfolgt in Bezug auf ein sich fortlaufend ändernden Kollektivs der Nutzdaten. Das Kollektiv ist vorzugsweise ein gleitender Ausschnitt der ermittelten Nutzdaten, die jeweils ein Merkmal des untersuchten Spritzgußteils repräsentieren. Der gleitende Ausschnitt wird überlappend verschoben, d.h. wiederholt wird eine definierte Anzahl von zuvor erfassten Nutzdaten aus dem betrachteten Ausschnitt entfernt und eine definierte Anzahl von nach dem betrachteten Ausschnitt erfassten Werten hinzugenommen. Sofern zur statistischen Analyse und Aufbereitung jedes sich ändernden Kollektivs der Nutzdaten ein Mittelwert bestimmt wird, spricht man auch von einem gleitenden Mittelwert.

Um bei einem mehrere Kavitäten aufweisenden Formwerkzeug der Spritzgießmaschine die Steuerung von Prozessparametern individuell für einzelne Kavitäten vornehmen zu können, wird in einer Ausführungsform der Erfindung aus den Bilddaten jedes Spritzgußteils zusätzlich zu den Nutzdaten mindestens eine Kavitätsinformation ermittelt, um zu bestimmen in welcher Kavität des Formwerkzeuges das Spritzgußteil hergestellt wurde. Die Kavitätsinformation kann beispielsweise während des Spritzgießens in jedes Spritzgußteil eingeformt und anschließend von dem mindestens einen digitalen Bildaufnahmegerät des Prüfsystems erfasst werden. Die vom Prüfsystem ausgelesenen Kavitätsinformationen erlauben es, die Nutzdaten zu den Spritzgußteilen aus jeder Kavität zu ermitteln.

Vorzugsweise werden aus den Bilddaten jedes zu dem Prüfsystem geförderten Spritzgußteils Nutzdaten zu mehreren Merkmalen des Spritzgußteils abgeleitet. Die wiederholte statistische Analyse und Aufbereitung der jedes weitere Merkmal betreffende Kollektive der Nutzdaten und das Ableiten von Steuerungsdaten werden für jedes Merkmal separat ausgeführt.

Grundsätzlich ist es jedoch auch möglich, Kollektive von Nutzdaten unterschiedlicher Merkmale jedes Spritzgußteils mit multivariaten statistischen Verfahren gemeinsam statistisch zu analysieren und aufzubereiten, insbesondere wenn eine Abhängigkeitsstruktur zwischen den unterschiedlichen Merkmalen besteht. Durch multivariate Analyse wird die Menge der Nutzdaten effektiv reduziert, ohne die darin enthaltene Information wesentlich zu reduzieren.

Abhängig von der Beschaffenheit der Nutzdaten kommen unterschiedliche statistische Modelle zu deren Analyse und Aufbereitung in Betracht. Hierzu wird eine geeignete Häufigkeitsverteilungsfunktion zur deskriptiven statistischen Beschreibung der Nutzdaten ausgewählt und mindestens ein Verteilungsparameter, der die Form/ Lage der Häufigkeitsverteilungsfunktion für jedes Kollektiv der Nutzdaten festlegt, ermittelt.

Repräsentieren die Nutzdaten beispielsweise den Durchmesser einer hohlzylindrischen Kappe kann davon ausgegangen werden, dass die den Durchmesser repräsentierenden Nutzdaten normalverteilt sind. Die Häufigkeitsverteilung der Nutzdaten in dem Kollektiv kann daher durch eine GaußVerteilungsfunktion beschrieben werden. Die Verteilungsparameter der den Durchmesser repräsentierenden Nutzwerte sind ein Mittelwert und eine Streuung um diesen Mittelwert (Standardabweichung), die zugleich auch die Qualität des Herstellungsprozesses wiederspiegelt. Mindestens einer der beiden Verteilungsparameter, beispielsweise der Mittelwert, wird mit einem Sollwert für diesen Verteilungsparameter verglichen. Die Steuerungsdaten werden aus einer außerhalb eines Toleranzbereichs liegenden Abweichung zwischen dem Verteilungsparameter und dem Sollwert abgleitet. Der Toleranzbereich kann auch den Wert "0" annehmen, so dass aus jeder Abweichung Steuerungsdaten abgeleitet werden. Der Steuerungsrechner ändert aufgrund der Steuerungsdaten einen Prozessparameter der Spritzgießmaschine, um der Abweichung entgegenzuwirken. Als zu ändernder Prozessparameter kommt beispielsweise die Prozesstemperatur in der Kavität des Formwerkzeugs in Betracht, um den Durchmesser der Verschlusskappen zu verändern.

Repräsentieren die Nutzdaten als Merkmal des Spritzgußteils eine Ovalität einer Verschlusskappe, sind Werte kleiner als Null nicht möglich. Zur deskriptiven statistischen Beschreibungen der Nutzdaten ist daher beispielsweise die Rayleigh-Verteilungsfunktion geeignet.

Repräsentieren die Nutzdaten als Merkmal des Spritzgußteils beispielsweise das Vorhanden- bzw. Nichtvorhandensein von Flecken, nehmen die Nutzdaten lediglich zwei Zustände an. Zur deskriptiven statistischen Beschreibungen der Nutzdaten ist daher beispielsweise die Poisson-Verteilungsfunktion geeignet, die durch einen reellen Parameter λ größer Null beschrieben wird, der den Erwartungswert und gleichzeitig die Varianz der Verteilung beschreibt.

Zur statistischen Beschreibung der Nutzdaten können darüber hinaus weitere Parameter, wie beispielsweise die Schiefe, die Wölbung, der Median, das Maximum oder der Schwerpunkt, herangezogen werden.

Wird das Ableiten der Steuerungsdaten auf der Datenverarbeitungseinheit des Prüfsystems durchgeführt, kann die Belastung des Netzwerks nochmals reduziert werden. Alternativ werden die durch statistische Analyse und Aufbereitung reduzierten Nutzdaten über das Netzwerk übertragen und das Ableiten der Steuerungsdaten auf dem Steuerungsrechner der Spritzgießmaschine durchgeführt.

Eine Verbesserung des Regelvorgangs aufgrund einer trendbasierten Prognose wird dadurch erreicht, dass ein Trend der Nutzdaten ermittelt und bei der Ableitung der Steuerungsdaten berücksichtigt wird.

Das wiederholte Übertragen der reduzierten Nutzdaten oder der Steuerungsdaten erfolgt durch ein sogenanntes Polling oder Pushing.

Beim Polling wird das wiederholte Übertragen der Daten durch eine Abfrage des Steuerungsrechners bei dem Datenverarbeitungssystem ausgelöst. Der Steuerungsrechner entscheidet dabei als Client selbstständig über den Zeitpunkt der Abfrage bei der als Server fungierenden Datenverarbeitungseinheit des Prüfsystems.

Beim Pushing wird das wiederholte Übertragen der Daten durch ein unaufgefordertes Senden durch die Datenverarbeitungseinheit des Prüfsystems ausgelöst. Dieses Verfahren bietet sich an, sofern die Daten zyklisch übertragen werden sollen. Durch die Vereinbarung einer zyklischen Übertragung der Daten entfällt eine zusätzliche Netzwerksbelastung durch die beim Polling erforderliche Abfrage. Bei zyklischen Übertragungen kann die Zykluszeit beispielsweise in einem Bereich zwischen 15 - 50 Sekunden liegen.

Des Weiteren besteht beim Pushing von Daten die Möglichkeit, dass die Datenverarbeitungseinheit des Prüfsystems automatisch eine Datenübertragung auslöst, sobald neue Steuerungsdaten vorliegen (Monitoring).

Das Netzwerk zur Datenübertragung zwischen der Datenverarbeitungseinheit des Prüfsystems und dem Steuerungsrechner der Spritzgußmaschine kann kabelgebunden oder als Funknetzwerk ausgestaltet sein.

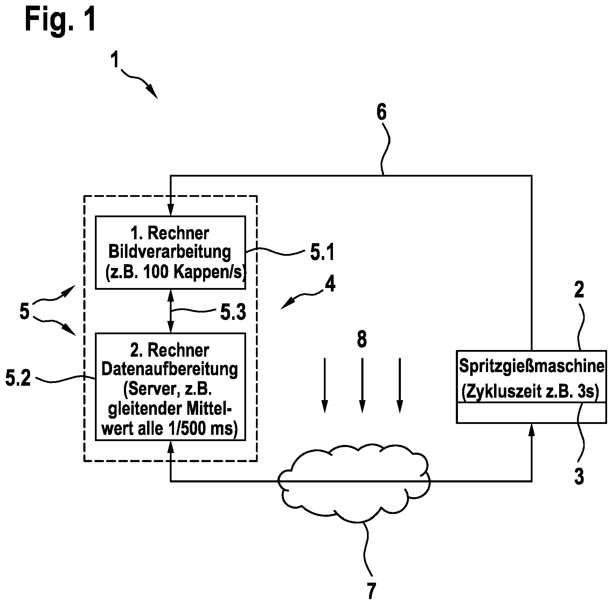

### Nachfolgend wird die Erfindung anhand von Figur 1 näher erläutert:

Figur 1 zeigt eine Anordnung (1) zur Steuerung mindestens eines Prozessparameters einer Spritzgießmaschine (2). Die Spritzgießmaschine (2) ist zum zyklischen Herstellen von mehreren übereinstimmenden Spritzgußteilen in mehreren Kavitäten eines Formwerkzeuges eingerichtet. Bei den Spritzgußteilen handelt es sich beispielsweise um Verschlusskappen für Behälter. Die Verschlusskappen sind rotationssymmetrische Hohlzylinder. Ein wesentliches, qualitätsbestimmendes Merkmal der Verschlusskappen ist beispielsweise die Einhaltung eines konstanten Innendurchmessers.

Mittels eines Steuerungsrechners (3) der Spritzgießmaschine lassen sich deren Prozessparameter einstellen, wie beispielsweise die Prozesstemperatur, um die Schrumpfung beim Abkühlen der Spritzgußteile zu beeinflussen beziehungsweise Spannungen zu verringern.

Die Anordnung (1) verfügt darüber hinaus über ein optisches Prüfsystem (4), welches eine Datenverarbeitungseinheit (5) und mindestens ein Aufnahmegerät, insbesondere in Form einer digitalen Stehbildkamera zum Aufnehmen von Bilddaten der mit der Spitzgießmaschine hergestellten Verschlusskappen aufweist.

Die Datenverarbeitungseinheit (5) des optischen Prüfsystems (4) ist in einem räumlichen Abstand von einigen Metern zu der Spritzgießmaschine (2) aufgestellt. Die aus der Spritzgießmaschine (2) entformten Verschlusskappen werden mit einer Fördereinrichtung entlang einer Förderstrecke (6) unmittelbar nach der Herstellung und dem Entformen aus dem Formwerkzeug in den Aufnahmebereich der digitalen Kamera des optischen Prüfsystems (4) gefördert. Die Datenverarbeitungseinheit (5) des optischen Prüfsystems (4) verfügt in dem dargestellten Ausführungsbeispiel über einen ersten Rechner (5.1) zur Bildverarbeitung der von der digitalen Kamera aufgenommenen Bilddaten sowie einen zweiten Rechner (5.2) zur statistischen Analyse und Aufbereitung der von dem ersten Rechner zur Verfügung gestellten Nutzdaten, die im vorliegenden Ausführungsbeispiel den Durchmesser jeder Verschlusskappe repräsentieren. Der erste und zweite Rechner (5.1, 5.2) sind innerhalb des optischen Prüfsystems (4) über eine schnelle Datenverbindung (5.3) gekoppelt.

Der bildverarbeitende erste Rechner (5.1) ist in der Lage, die Bilddaten der Aufnahmen von mindestens 100 Kappen je Sekunde zu verarbeiten, die Nutzdaten zur Verfügung zu stellen und für eine gewisse Zeit zu speichern.

Auf dem zweiten Rechner (5.2) wird im Rahmen der wiederholten statistischen Analyse und Aufbereitung mit einer deutlich höheren Frequenz ein gleitender Mittelwert der von dem ersten Rechner bereitgestellten Nutzdaten ermittelt. Die derart aufbereiteten Nutzdaten werden von dem zweiten Rechner (5.2) der Datenverarbeitungseinheit (5) ständig aktualisiert und bereitgehalten.

Der Steuerungsrechner (3) der Spritzgießmaschine (2) kann durch eine Anfrage (Polling) die reduzierte Menge der aufbereiteten Nutzdaten zu beliebiger Zeit anfordern, beispielsweise alle 30 Sekunden, um den Produktionsprozess der Verschlusskappen bei einer festgestellten, außerhalb eines Toleranzbereichs liegenden Soll-/Istabweichung zwischen dem übertragenen Mittelwert und einem Referenzwert nachzuregeln.

Die Übertragung der Daten erfolgt über ein Netzwerk (7), das die Datenverarbeitungseinheit (5) des optischen Prüfsystems (4) mit dem Steuerungsrechner (3) der Spritzgießmaschine (2) sowie weiteren Netzwerk-Komponenten (8) verbindet.

Aus den aufgenommenen Bilddaten jeder Verschlusskappe werden vorzugsweise nicht nur diejenigen Nutzdaten ermittelt, die den Innendurchmesser jeder Verschlusskappe repräsentieren, sondern darüber hinaus Nutzdaten, die andere Merkmale der Verschlusskappen repräsentieren, wie beispielsweise eine Farbabweichung des Materials, eine Kontamination, Flecken, Unterspritzungen, Überspritzungen sowie die Ausformung beziehungsweise Anwesenheit von bestimmten Funktionsteilen der Verschlusskappe, wie beispielsweise das Garantieband.

Abhängig von den erfassten Merkmalen werden Steuerungsdaten generiert, die unterschiedliche Prozessparameter der Spritzgießmaschine anpassen. Bei Farbabweichungen des Materials wird beispielsweise das Mischungsverhältnis von Master-Batch und Rohpolymer in der Spritzgießmaschine angepasst. Kontaminationen und Flecken werden vielfach durch eine zu hohe Prozesstemperatur hervorgerufen, sodass als Prozessparameter die Prozesstemperatur in einzelnen Kavitäten reduziert werden kann. Beim Auftreten von Unter- und Überspritzungen wird als Prozessparameter der Prozessdruck und/oder die Materialmenge, die in die einzelnen Kavitäten eingespritzt wird angepasst. Bei fehlenden Funktionsteilen kommen multiple Ursachen in Betracht, sodass der Steuerungsrechner (3) die betroffene Kavität der Spritzgießmaschine (2) ggf. notabschaltet.

Anstelle der Methode der Bildung gleitender Mittelwerte aus den Nutzdaten kann zur statistischen Analyse und Aufbereitung der Nutzdaten eines sich fortlaufend ändernden Kollektivs eine Häufigkeitsverteilungsfunktion, beispielsweise die Gaußverteilungsfunktion verwendet werden.

In dem in Figur 1 dargestellten Ausführungsbeispiel werden die Steuerungsdaten erst nach Datenübertragung der reduzierten Nutzdaten über das Netzwerk (7) generiert. Auf dem Steuerungsrechner (3) werden hierzu die übertragenen gleitenden Mittelwerte mit einem Sollwert für den Durchmesser verglichen. Liegt eine Abweichung außerhalb eines wertemäßig vorgegebenen Toleranzbereichs vor, werden abhängig von der Größe der Abweichung Steuerungsdaten generiert, die den für die Abweichung verantwortlichen Prozessparameter ändern.

Ein wesentlicher Vorteil der Erfindung besteht darin, dass ein für die Prozesssteuerung irrelevantes Rauschen der Nutzdaten gefiltert und nicht über das Netzwerk übertragen wird. Durch die Analyse, Aufbereitung und Speicherung der Nutzdaten auf der leistungsfähigen Datenverarbeitungseinheit (5) des optischen Prüfsystems (4) ist nur eine geringe Rechenleistung des Steuerungsrechners (3) der Spritzgießmaschine (2) erforderlich, um die Nutzdaten in Steuerungsdaten für Prozessparameter umzusetzen. Die über das Netzwerk (7) übertragene Datenmenge und damit die Netzwerksbelastung werden reduziert. Des Weiteren kann die reduzierte Netzwerksbelastung Kostenvorteile mit sich bringen, wenn für die Datenübertragung beispielsweise Cloud-Dienste in Anspruch genommen werden. Das Verfahren zur wiederholten statistischen Analyse und Aufbereitung der Nutzdaten lässt sich an Besonderheiten der Spritzgießmaschine und des jeweiligen Spritzgießprozesses anpassen. Des Weiteren kann durch das erfindungsgemäße Verfahren die Datenübertragung auf diejenigen Parameter beziehungsweise Nutzdaten beschränkt werden, auf die die Spritzgießmaschine Einfluss nehmen kann.

Die Datenverarbeitungseinheit (5) hält die aufbereiteten Nutzdaten in Echtzeit bereit, die jedoch nur bei Bedarf an den Steuerungsrechner (3) übertragen werden. Die Datenkommunikation ist damit hoch effizient und auf den tatsächlichen Bedarf der Spritzgießmaschine ausgelegt.

**Bezugszeichenliste**

| Nr. | **Bezeichnung** |
|---|---|
| 1. | Anordnung |
| 2. | Spritzgießmaschine |
| 3. | Steuerungsrechner |
| 4. | Optisches Prüfsystem |
| 5. | Datenverarbeitungseinheit |
| 5.1 | Erster Rechner |
| 5.2 | Zweiter Rechner |
| 5.3 | Datenverbindung |
| 6. | Förderstrecke |
| 7. | Netzwerk |
| 8 . | Netzwerk-Komponente |

## Patentansprüche

1. Verfahren zur Steuerung mindestens eines Prozessparameters einer Spritzgießmaschine (2) umfassend einem Steuerungsrechner (3), der über ein Netzwerk (7) mit einer Datenverarbeitungseinheit (5) eines optischen Prüfsystems (4) verbunden ist, wobei das Netzwerk (7) neben der Datenverarbeitungseinheit (5) des Prüfsystems (4) und dem Steuerungsrechner (3) weitere Netzwerkkomponenten (8) zum Datenaustausch miteinander verbindet, umfassend die Schritte:
- zyklisches Herstellen von übereinstimmenden Spritzgußteilen mit der Spritzgießmaschine (2),
- Entformen der hergestellten Spritzgußteile aus einem Formwerkzeug der Spritzgießmaschine (2),
- Fördern von sämtlichen entformten Spritzgußteilen zu dem Prüfsystem mit einer Fördereinrichtung,
- Aufnehmen von Bilddaten jedes zu dem Prüfsystem (4) geförderten Spritzgußteils mit einem digitalen Bildaufnahmegerät des Prüfsystems,
- Ermittlung von Nutzdaten aus den Bilddaten mit Hilfe der Datenverarbeitungseinheit (5), wobei die Nutzdaten ein Merkmal jedes Spritzgußteils repräsentieren,
- wiederholte statistische Analyse und Aufbereitung eines sich fortlaufend ändernden Kollektivs der Nutzdaten mittels der Datenverarbeitungseinheit (5) derart, dass die Menge der Nutzdaten des Kollektivs reduziert wird,
- wiederholtes Übertragen der reduzierten Nutzdaten jedes Kollektivs über das Netzwerk (7) zu dem Steuerungsrechner (3) und Ableiten von Steuerungsdaten aus den reduzierten Nutzdaten jedes Kollektivs mittels des Steuerungsrechners (3) oder
- Ableiten von Steuerungsdaten aus den reduzierten Nutzdaten jedes Kollektivs mittels der Datenverarbeitungseinheit (5) und wiederholtes Übertragen der Steuerungsdaten über das Netzwerk (7) zu dem Steuerungsrechner (3),
- wobei das wiederholte Übertragen der reduzierten Nutzdaten oder der Steuerungsdaten durch eine Abfrage des Steuerungsrechners (3) bei der Datenverarbeitungseinheit (5) oder durch ein unaufgefordertes Senden der Nutzdaten durch die Datenverarbeitungseinheit (5) ausgelöst wird,
- Ändern des mindestens einen Prozessparameters mittels des Steuerungsrechners (3) abhängig von den Steuerungsdaten.

2. Verfahren nach Anspruch 1, **dadurch gekennzeichnet, dass** die Förderzeit für das Fördern der entformten Spritzgußteile zu dem Prüfsystem (4) für sämtliche Spritzgußteile maximal um das zweifache der Zykluszeit der Spritzgießmaschine divergiert.

3. Verfahren nach Anspruch 1 oder 2, **dadurch gekennzeichnet, dass** die Nutzdaten geometrische Merkmale und/oder Defekte jedes Spritzgußteils repräsentieren.

4. Verfahren nach einem der Ansprüche 1 bis 3, **dadurch gekennzeichnet, dass** das Kollektiv der sich ändernden Nutzdaten ein gleitender Ausschnitt der ermittelten Nutzdaten ist.

5. Verfahren nach einem der Ansprüche 1 bis 4, **dadurch gekennzeichnet, dass**
- in mehreren Kavitäten eines Formwerkzeugs der Spritzgießmaschine (2) mehrere Spritzgußteile je Herstellungszyklus gleichzeitig hergestellt werden,
- aus den Bilddaten jedes Spritzgußteils zusätzlich zu den Nutzdaten eine Kavitätsinformation ermittelt wird, um zu bestimmen aus welcher Kavität des Formwerkzeugs das Spritzgußteil ausgeworfen wurde und
- der mindestens eine Prozessparameter gezielt in einzelnen Kavitäten unter Berücksichtigung der Kavitätsinformation geändert wird.

6. Verfahren nach einem der Ansprüche 1 bis 5, **dadurch gekennzeichnet, dass**
- aus den Bilddaten Nutzdaten ermittelt werden, die mindestens ein weiteres Merkmal jedes Spritzgußteils repräsentieren und
- die wiederholte statistische Analyse und Aufbereitung der jedes weitere Merkmal betreffenden Kollektive der Nutzdaten und das Ableiten von Steuerungsdaten aus den reduzierten Nutzdaten separat für jedes Merkmal ausgeführt werden.

7. Verfahren nach einem der Ansprüche 1 bis 6, **dadurch gekennzeichnet, dass** zur statistischen Analyse und Aufbereitung der Nutzdaten eine Häufigkeitsverteilungsfunktion zur deskriptiven statistischen Beschreibung der Nutzdaten ausgewählt und mindestens ein Verteilungsparameter, der die Häufigkeitsverteilungsfunktion für jedes Kollektiv der Nutzdaten beschreibt, ermittelt wird.

8. Verfahren nach Anspruch 7, **dadurch gekennzeichnet, dass** der mindestens eine Verteilungsparameter mit einem Sollwert für diesen Verteilungsparameter verglichen wird und die Steuerungsdaten aus einer außerhalb eines Toleranzbereichs liegenden Abweichung zwischen dem mindestens einen Verteilungsparameter und dem Sollwert abgeleitet werden.

9. Verfahren nach einem der Ansprüche 1 bis 6, **dadurch gekennzeichnet, dass** zur statistischen Analyse und Aufbereitung jedes Kollektivs ein Mittelwert der Nutzdaten bestimmt wird.

10. Verfahren nach Anspruch 9, **dadurch gekennzeichnet, dass** der Mittelwert der Nutzdaten jedes Kollektivs mit einem Sollwert für die Nutzdaten verglichen wird und die Steuerungsdaten aus einer außerhalb eines Toleranzbereichs liegenden Abweichung zwischen dem Mittelwert und dem Sollwert abgleitet werden.

11. Verfahren nach einem der Ansprüche 1 bis 10, **dadurch gekennzeichnet, dass** ein Trend der reduzierten Nutzdaten im Rahmen der wiederholten statistischen Analyse und Aufbereitung bei der Ableitung der Steuerungsdaten berücksichtigt wird.

12. Verfahren nach einem der Ansprüche 1 bis 11, **dadurch gekennzeichnet, dass** das Abfragen oder Senden zyklisch erfolgt.

13. Verfahren nach einem der Ansprüche 8 -12, **dadurch gekennzeichnet, dass** das Senden automatisch ausgelöst wird, sofern eine außerhalb eines Toleranzbereichs liegende Abweichung zwischen dem mindestens einen Verteilungsparameter und dem Sollwert oder dem Mittelwert und dem Sollwert vorliegt.

14. Anordnung (1) zur Steuerung mindestens eines Prozessparameters einer Spritzgießmaschine (2) umfassend
- eine Spritzgießmaschine (2) mit einem Steuerungsrechner (3), eingerichtet zum zyklischen Herstellen von übereinstimmenden Spritzgußteilen in mindestens einer Kavität eines Formwerkzeugs,
- ein optisches Prüfsystem (4), welches eine Datenverarbeitungseinheit (5) und ein digitales Bildaufnahmegerät zum Aufnehmen von Bilddaten der mit der Spritzgießmaschine hergestellten Spritzgußteile aufweist,
- eine Fördereinrichtung eingerichtet zum Fördern von sämtlichen aus dem Formwerkzeug entformten Spritzgußteilen zu dem Prüfsystem (4),
- ein Netzwerk (7), welches neben der Datenverarbeitungseinheit (5) des Prüfsystems (4) und dem Steuerungsrechner (3) weitere Netzwerkkomponenten (8) zum Datenaustausch miteinander verbindet,
- wobei das optische Prüfsystem (4), das Netzwerk (7) und die Spritzgießmaschine (2) konfiguriert sind folgende Schritte auszuführen:
- Aufnehmen von Bilddaten jedes dem Prüfsystem (4) zugführten Spritzgußteils mit dem Bildaufnahmegerät,
- Ermittlung von Nutzdaten aus den Bilddaten mit Hilfe der Datenverarbeitungseinheit (5), wobei die Nutzdaten ein Merkmal jedes Spritzgußteils repräsentieren,
- wiederholte statistische Analyse und Aufbereitung eines sich fortlaufend ändernden Kollektivs der Nutzdaten mit Hilfe der Datenverarbeitungseinheit(5) derart, dass die Menge der Nutzdaten des Kollektivs reduziert wird,
- wiederholtes Übertragen der reduzierten Nutzdaten jedes Kollektivs über das Netzwerk (7) zu dem Steuerungsrechner (3) und Ableiten von Steuerungsdaten aus den reduzierten Nutzdaten jedes Kollektivs mittels des Steuerungsrechners (3) oder
- Ableiten von Steuerungsdaten aus den reduzierten Nutzdaten jedes Kollektivs mittels der Datenverarbeitungseinheit (5) und wiederholtes Übertragen der Steuerungsdaten über das Netzwerk (7) zu dem Steuerungsrechner (3),
- wobei der Steuerungsrechner (3) konfiguriert ist, das wiederholte Übertragen der reduzierten Nutzdaten oder der Steuerungsdaten durch eine Abfrage bei der Datenverarbeitungseinheit (5) auszulösen oder die Datenverarbeitungseinheit (5) konfiguriert ist, das wiederholte Übertragen der reduzierten Nutzdaten oder der Steuerungsdaten durch ein unaufgefordertes Senden der Nutzdaten auszulösen,
- Ändern des mindestens einen Prozessparameters mittels des Steuerungsrechners (3) abhängig von den Steuerdaten.

## Claims

1. A method for controlling at least one process parameter of an injection moulding machine (2) comprising a control computer (3) which is connected via a network (7) to a data processing unit (5) of an optical testing system (4), wherein in addition to the data processing unit (5) of the testing system (4) and the control computer (3), the network (7) connects further network components (8) for data exchange with one another, comprising the steps:
- cyclic production of identical injection-moulded parts using the injection moulding machine (2),
- demoulding of the injection-moulded parts produced from a moulding tool of the injection moulding machine (2),
- conveying all the demoulded injection-moulded parts to the testing system using a conveying device,
- recording image data of each injection-moulded part conveyed to the testing system (4) using a digital imaging device of the testing system,
- determining useful data from the image data with the aid of the data processing unit (5), wherein the useful data represent a feature of each injection-moulded part,
- repeated statistical analysis and preparation of a continuously changing group of useful data by means of the data processing unit (5) in such a manner that the quantity of useful data of the group is reduced,
- repeated transmission of the reduced useful data of each group via the network (7) to the control computer (3) and derivation of control data from the reduced useful data of each group by means of the control computer (3) or
- derivation of control data from the reduced useful data of each group by means of the data processing unit (5) and repeated transmission of the control data via the network (7) to the control computer (3),
- wherein the repeated transmission of the reduced useful data or the control data is initiated by an interrogation of the control computer (3) in the data processing unit (5) or by an unrequested sending of the useful data by the data processing unit (5),
- changing the at least one process parameter by means of the control computer (3) depending on the control data.

2. The method according to claim 1, **characterized in that** the conveying time for conveying the demoulded injection-moulded parts to the testing system (4) diverges by a maximum of twice the cycle time of the injection moulding machine for all the injection-moulded parts.

3. The method according to claim 1 or 2, **characterized in that** the useful data represent geometrical features and/or defects of each injection-moulded part.

4. The method according to one of claims 1 to 3, **characterized in that** the group of varying useful data is a moving segment of the determined useful data.

5. The method according to one of claims 1 to 4, **characterized in that**
- in a plurality of cavities of a moulding tool of the injection moulding machine (2) a plurality of injection-moulded parts are produced simultaneously per production cycle,
- in addition to the useful data, cavity information is determined from the image data of each injection-moulded part in order to determine from which cavity of the moulding tool the injection-moulded part has been ejected and
- the at least one process parameter is varied specifically in individual cavities taking into account the cavity information.

6. The method according to one of claims 1 to 5, **characterized in that**
- useful data are determined from the image data which represent at least one further feature of each injection-moulded part and
- the repeated statistical analysis and preparation of the group of useful data relating to each further feature and the derivation of control data from the reduced useful data are carried out separately for each feature.

7. The method according to one of claims 1 to 6, **characterized in that** for the statistical analysis and preparation of the useful data a frequency distribution function is selected for the descriptive statistical description of the useful data and at least one distribution parameter which describes the frequency distribution function for each group of useful data is determined.

8. The method according to claim 7, **characterized in that** the at least one distribution parameter is compared with a desired value for this distribution parameter and the control data are derived from a deviation between the at least one distribution parameter and the desired value lying outside a tolerance range.

9. The method according to one of claims 1 to 6, **characterized in that** a mean of the useful data is determined for the statistical analysis and preparation of each group.

10. The method according to claim 9, **characterized in that** the mean of the useful data of each group is compared with a desired value for the useful data and the control data is derived from a deviation between the mean and the desired value lying outside a tolerance range.

11. The method according to one of claims 1 to 10, **characterized in that** a trend of the reduced useful data within the framework of the repeated statistical analysis and preparation is taken into account when deriving the control data.

12. The method according to one of claims 1 to 11, **characterized in that** the interrogation or sending takes place cyclically.

13. The method according to one of claims 8 - 12, **characterized in that** the sending is initiated automatically if there is a deviation between the at least one distribution parameter and the desired value or the mean and the desired value which lies outside a tolerance range.

14. An arrangement (1) for controlling at least one process parameter of an injection moulding machine (2) comprising
- an injection moulding machine (2) with a control computer (3) adapted for cyclic production of identical injection-moulded parts in at least one cavity of a moulding tool,
- an optical testing system (4) which comprises a data processing unit (5) and a digital imaging device for recording image data of the injection-moulded parts produced using the injection moulding machine,
- a conveying device adapted for conveying all the injection-moulded parts demoulded from the moulding tool to the testing system (4),
- a network (7) which, in addition to the data processing unit (5) of the testing system (4) and the control computer (3), connects further network components (8) to one another for data exchange,
- wherein the optical testing system (4), the network (7) and the injection moulding machine (2) are configured to execute the following steps:
- recording image data of each injection-moulded part supplied to the testing system (4) using the imaging device,
- determining useful data from the image data with the aid of the data processing unit (5), wherein the useful data represent a feature of each injection-moulded part,
- repeated statistical analysis and preparation of a continuously changing group of useful data by means of the data processing unit (5) in such a manner that the quantity of useful data of the group is reduced,
- repeated transmission of the reduced useful data of each group via the network (7) to the control computer (3) and derivation of control data from the reduced useful data of each group by means of the control computer (3) or
- derivation of control data from the reduced useful data of each group by means of the data processing unit (5) and repeated transmission of the control data via the network (7) to the control computer (3),
- wherein the control computer (3) is configured to initiate the repeated transmission of the reduced useful data or the control data by an interrogation in the data processing unit (5) or the data processing unit (5) is configured to initiate the repeated transmission of the reduced useful data or the control data by an unrequested sending of the useful data,
- changing the at least one process parameter by means of the control computer (3) depending on the control data.

## Revendications

1. Procédé, destiné à commander au moins un paramètre de processus d'une machine de moulage par injection (2), comprenant un ordinateur de commande (3), qui par l'intermédiaire d'un réseau (7) est connecté avec une unité de traitement de données (5) d'un système de contrôle (4) optique, hormis l'unité de traitement de données (5) du système de contrôle (4) et l'ordinateur de commande (3), le réseau (7) connectant d'autres composants de réseau (8) pour l'échange de données réciproque, comprenant les étapes consistant à :
- fabriquer cycliquement des pièces moulées par injection concordantes, à l'aide de la machine de moulage par injection (2),
- démouler les pièces moulées par injection fabriquées d'un outil de moulage de la machine de moulage par injection (2),
- convoyer l'ensemble des pièces moulées par injection fabriquées vers le système de contrôle à l'aide d'un système de convoyage,
- enregistrer des données d'images de chaque pièce moulée par injection convoyée vers le système de contrôle (4), à l'aide d'un appareil de prise d'images numérique du système de contrôle,
- déterminer des données utiles à partir des données d'images, à l'aide de l'unité de traitement de données (5), les données utiles représentant une caractéristique de chaque pièce moulée par injection,
- analyser statistiquement de manière réitérée et préparer un collectif des données utiles variant continuellement au moyen de l'unité de traitement de données (5), de telle sorte que la quantité des données utiles du collectif soit réduite,
- transférer de manière réitérée les données utiles réduites de chaque collectif par l'intermédiaire du réseau (7) vers l'ordinateur de commande (3) et dériver des données de commande des données utiles réduites de chaque collectif au moyen de l'ordinateur de commande (3) ou
- dériver des données de commande à partir des données utiles réduites de chaque collectif au moyen de l'unité de traitement de données (5) et transférer de manière réitérée les données de commande par l'intermédiaire du réseau (7) vers l'ordinateur de commande (3),
- le transfert réitéré des données utiles réduites ou des données de commande étant déclenché par une interrogation de l'ordinateur de commande (3) auprès de l'unité de traitement de données (5) ou par une émission spontanée des données utiles par l'unité de traitement de données (5),
- modifier l'au moins un paramètre de processus au moyen de l'ordinateur de commande (3), en fonction de données de commande.

2. Procédé selon la revendication 1, **caractérisé en ce que** le temps de convoyage pour convoyer les pièces moulées par injection démoulées vers le système de contrôle (4) pour l'ensemble des pièces moulées par injection diverge au maximum du double du temps de cycle de la machine de moulage par injection.

3. Procédé selon la revendication 1 ou 2, **caractérisé en ce que** les données utiles représentent des caractéristiques géométriques et/ou des défauts de chaque pièce moulée par injection.

4. Procédé selon l'une quelconque des revendications 1 à 3, **caractérisé en ce que** le collectif des données utiles variantes est un extrait glissant des données utiles déterminées.

5. Procédé selon l'une quelconque des revendications 1 à 4, **caractérisé en ce que**
- à chaque cycle de fabrication, dans plusieurs cavités d'un outil de moulage de la machine de moulage par injection (2) sont fabriquées simultanément plusieurs pièces moulées par injection,
- à partir des données d'images de chaque pièce moulée par injection, une information sur la cavité est déterminée additionnellement aux données utiles, pour déterminer à partir de quelle cavité de l'outil de moulage la pièce moulée par injection a été éjectée et
- l'au moins un paramètre de processus est modifié de manière ciblée dans des cavités individuelles, sous considération de l'information sur la cavité.

6. Procédé selon l'une quelconque des revendications 1 à 5, **caractérisé en ce que**
- à partir des données d'images sont déterminées des données utiles qui représentent au moins une caractéristique supplémentaire de chaque pièce moulée par injection et
- l'analyse statistique réitérée et la préparation des collectifs des données utiles concernant chaque caractéristique supplémentaire et la dérivation de données de commande à partir des données utiles réduites sont réalisées séparément pour chaque caractéristique.

7. Procédé selon l'une quelconque des revendications 1 à 6, **caractérisé en ce que** pour l'analyse statistique et la préparation des données utiles, une fonction de répartition des fréquences est sélectionnée pour la caractérisation statistique descriptive des données utiles et au moins un paramètre de répartition qui décrit la fonction de répartition des fréquences pour chaque collectif des données utiles est déterminé.

8. Procédé selon la revendication 7, **caractérisé en ce que** l'au moins un paramètre de répartition est comparé avec une valeur de consigne pour ledit paramètre de répartition et les données de commande sont dérivées d'un écart situé hors d'une plage de tolérance entre l'au moins un paramètre de répartition et la valeur de consigne.

9. Procédé selon l'une quelconque des revendications 1 à 6, **caractérisé en ce que** pour l'analyse statistique et la préparation de chaque collectif, une valeur moyenne des données utiles est déterminée.

10. Procédé selon la revendication 9, **caractérisé en ce que** la valeur moyenne des données utiles de chaque collectif est comparée avec une valeur de consigne pour les données utiles et les données de commande sont dérivées d'un écart situé hors d'une plage de tolérance entre la valeur moyenne et la valeur de consigne.

11. Procédé selon l'une quelconque des revendications 1 à 10, **caractérisé en ce qu'**une tendance des données utiles réduites est prise en compte dans le cadre de l'analyse statistique réitérée et de la préparation, lors de la dérivation des données de commande.

12. Procédé selon l'une quelconque des revendications 1 à 11, **caractérisé en ce que** l'interrogation ou l'émission s'effectue de manière cyclique.

13. Procédé selon l'une quelconque des revendications 8 - 12, **caractérisé en ce que** l'émission est déclenchée automatiquement, en présence d'un écart situé hors d'une plage de tolérance entre l'au moins un paramètre de répartition et la valeur de consigne ou la valeur moyenne et la valeur de consigne.

14. Agencement (1), destiné à commander au moins un paramètre de processus d'une machine de moulage par injection (2), comprenant
- une machine de moulage par injection (2), pourvue d'un ordinateur de commande (3), aménagé pour la fabrication cyclique de pièces moulées par injection concordantes dans au moins une cavité d'un outil de moulage,
- un système de contrôle (4) optique, lequel comporte une unité de traitement de données (5) et un appareil de prise d'images numérique, destiné à enregistrer des données d'images des pièces moulées par injection fabriquées à l'aide de la machine de moulage par injection,
- un système de convoyage, aménagé pour convoyer l'ensemble des pièces moulées par injection démoulées de l'outil de moulage vers' le système de contrôle (4),
- un réseau (7), qui hormis l'unité de traitement de données (5) du système de contrôle (4) et l'ordinateur de commande (3) connecte entre eux d'autres composants de réseau (8) pour l'échange de données,
- le système de contrôle (4) optique, le réseau (7) et la machine de moulage par injection (2) étant configurés pour réaliser les étapes suivantes, consistant à :
- enregistrer des données d'images de chaque pièce moulée par injection amenée vers le système de contrôle (4) à l'aide de l'appareil de prise d'images,
- déterminer des données utiles à partir des données d'images à l'aide de l'unité de traitement de données (5), les données utiles représentant une caractéristique de chaque pièce moulée par injection,
- analyser statistiquement de manière réitérée et préparer un collectif des données utiles variant continuellement au moyen de l'unité de traitement de données (5), de telle sorte que la quantité des données utiles du collectif soit réduite,
- transférer de manière réitérée les données utiles réduites de chaque collectif par l'intermédiaire du réseau (7) vers l'ordinateur de commande (3) et dériver des données de commande des données utiles réduites de chaque collectif au moyen de l'ordinateur de commande (3) ou
- dériver des données de commande à partir des données utiles réduites de chaque collectif au moyen de l'unité de traitement de données (5) et transférer de manière réitérée les données de commande par l'intermédiaire du réseau (7) vers l'ordinateur de commande (3),
- l'ordinateur de commande (3) étant configuré pour déclencher le transfert réitéré des données utiles réduites ou des données de commande par une interrogation auprès de l'unité de traitement de données (5) ou l'unité de traitement de données (5) étant configurée pour déclencher le transfert réitéré des données utiles réduites ou des données de commande par une émission spontanée des données utiles,
- modifier l'au moins un paramètre de processus au moyen de l'ordinateur de commande (3) en fonction des données de commande.
